# EUROPEAN PATENT APPLICATION

(11) **EP 3 872 634 A1**
(43) Date of publication of application: **01.09.2021**
(21) Application number: 20305196.6
(22) Date of filing: 27.02.2020
(51) Int. Cl.: G06F 9/48

(54) **MULTICORE SYSTEM ON CHIP ARCHITECTURE**

(71) Applicant: Mitsubishi Electric R&D Centre Europe B.V., 1119 NS Schiphol Rijk Amsterdam (NL); Mitsubishi Electric Corporation, Tokyo 100-8310 (JP)
(72) Inventor: ROLLET, Romain, 35000 RENNES (FR)
(74) Representative: Plasseraud IP

(57) **Abstract**

Examples include a method to process data in a multicore SOC, comprising receiving, from a MAC, input frames at a NIC of a RTOS implemented on a first core. The input frames are transmitted from the NIC to a frame processor of the RTOS for parsing and classifying in a first class related to RTOS tasks and a second class related to non RTOS tasks. The frames classified in the first class are transmitted to tasks of a sequencer of the RTOS and processed on the first core. The input frames classified in the second class are transmitted to a network device driver of a second OS implemented on a second core of the SOC, and processed on the second core. Output frames are transmitted to the frame processor, are classified and scheduled, and transmitted to the NIC and from the NIC to the MAC.

## Description

### BACKGROUND

Multicore system on chip architectures permit running several operating systems on a specific system on chip, whereby each operating system may operate using one or more cores. Such multicore systems may be homogeneous and include a plurality of identical cores, or may include different core types and be heterogeneous. Such multicore systems provide flexibility as to computing architecture.

### SUMMARY

The invention is defined by the appended independent claims. Additional features and advantages of the concepts herein disclosed are set forth in the description which follows.

The present disclosure describes a method to process data in a multicore system-on-chip, SOC, processing architecture comprising:
- receiving input frames at a network interface controller, NIC, of a real time operating system, RTOS, from a medium access controller, MAC, of the SOC, whereby the RTOS is implemented on a first core of the SOC;
- transmitting the input frames from the NIC of the RTOS to a frame processor of the RTOS;
- parsing and classifying the input frames at the frame processor according to a classification comprising at least a first class related to RTOS tasks and a second class related to non RTOS tasks;
- transmitting input frames classified in the first class from the frame processor to one or more tasks run by a sequencer of the RTOS;
- transmitting input frames classified in the second class from the frame processor to a network device driver of a second operating system, OS, implemented on a second core of the SOC, the second OS comprising a kernel space and a user space;
- processing on the first core the input frames transmitted to the tasks run by the sequencer of the RTOS and on the second core the input frames transmitted to the network device driver of the second OS;
- transmitting output frames related to RTOS tasks from the tasks run by the sequencer of the RTOS to the frame processor;
- transmitting output frames related to non RTOS tasks from the network device driver of the second OS to the frame processor;
- classifying and scheduling the output frames at the frame processor;
- transmitting the scheduled output frames from the frame processor to the NIC and from the NIC to the MAC.

Such an architecture permits running, on a same multicore SOC, time sensitive processes such as, for example, processes compliant with time sensitive networking (TSN) standards using the RTOS, and other less time sensitive processes on the second OS. This is achieved by ensuring that the handling of the input and output frames takes place centrally through components of the RTOS such as the NIC and the frame processor of the RTOS. In this disclosure, TSN is a set of standards specified by the Time-Sensitive Networking Task Group that is a part of the IEEE 802.1 Working Group.

Optionally the RTOS is implemented on additional first cores of the SOC. This can permit obtaining increased processing power for the RTOS without releasing the central controlled handling of the input and output frames.

Optionally the method further comprises:
- parsing and classifying the input frames at the frame processor according to the classification comprising one or more other classes related to other RTOS tasks; and
- transmitting input frames classified in the one or more other classes from the frame processor to one or more tasks run by one or more dedicated other sequencers of one or more dedicated other RTOS, whereby the one or more dedicated other RTOS are implemented on one or more dedicated cores of the SOC.
In such cases, an increase in the granularity of the classification of RTOS tasks can permit parallelizing the processing of such tasks over several RTOS, each RTOS benefiting from at least one dedicated processing core.

Optionally, the second OS is implemented on additional second cores of the SOC. Such a configuration may permit increasing the processing bandwidth of the second OS.

Optionally the method further comprises:
- parsing and classifying the input frames at the frame processor according to the classification comprising one or more further classes related to non RTOS tasks;
- transmitting input frames classified in the one or more further classes from the frame processor to one or more dedicated further network device drivers of one or more dedicated further OS implemented on one or more dedicated further cores of the SOC, the one or more dedicated further OS comprising a dedicated further kernel space and a dedicated further user space.
In such cases, an increase in the granularity of the classification of non RTOS tasks can permit parallelizing the processing of such tasks over several OS, each OS benefiting from at least one dedicated processing core.

Optionally, the method further comprises receiving, at the network device driver of the second OS, input frames exclusively transmitted from the frame processor of the RTOS. This may permit ensuring that the control of input frames is centralized by the frame processor of the RTOS.

Optionally, the method further comprises transmitting, by the network device driver of the second OS, output frames exclusively to the frame processor of the RTOS. This may permit ensuring that the control of output frames is centralized by the frame processor of the RTOS.

Optionally, the method further comprises sharing, by the RTOS and by the kernel of the second OS, a buffer storing frame data. Such sharing of common resources renders the architecture more efficient.

Optionally, the method further comprises preventing access to an RTOS buffer from the second OS. This may permit enforcing security for network tasks running over the RTOS.

Optionally the method further comprises:
- attaching, by the frame processor, a stream class identifier to the input frames according to classification rules; and
- passing the input frame and attached stream class identifier to a queue identification module of the frame processor.
Such stream class identifier may for example permit determining a queue in which the input frame may be posted for further processing by either the RTOS or the second OS.

Optionally, the method further comprises the frame processor applying dynamically defined classification rules. This may permit adapting the classification to different situations, in particular allowing the deployment of applications in the RTOS or the second OS in charge of processing input frames and generating output frames. More specifically, either one or both of the kernel of the second OS and applications of the RTOS are contributing to dynamically defining the classification rules. This could permit using feedback mechanisms to adapt the classification rules, such feedback originating from either one or both of the kernel of the second OS and applications of the RTOS.

Optionally the method further comprises:
- attaching, by the frame processor, a stream class identifier to the output frames according to classification rules; and
- applying scheduling rules to the output frames depending on both time and priority of the attached stream class of the output frames for frame transmission of the scheduled output frames.
This may permit controlling, by the frame processor, which output frames should be treated before others, for example to comply with TSN standard constraints.

The present disclosure also describes a multicore system-on-chip, SOC, device comprising processing cores and a memory, the processing cores being configured to operate according to any one of the methods according to this disclosure. Such a multicore SOC device may permit handling both a generic OS and an RTOS.

The present disclosure also describes a computer-readable storage medium comprising instructions which, when executed by processing cores of a multicore system-on-chip, SOC, device, cause the processing cores to carry out any one of the methods according to this disclosure.

### BRIEF DESCRIPTION OF THE DRAWINGS

Figure 1 illustrates an example method according to this disclosure.
Figure 2 illustrates another example method according to this disclosure.
Figure 3 illustrates another example method according to this disclosure.
Figure 4 illustrates an example SOC according to this disclosure.
Figure 5 illustrates another example SOC according to this disclosure.
Figure 6 illustrates an example frame processor according to this disclosure.
Figure 7 illustrates an example frame processor according to this disclosure.
Figure 8 illustrates another example SOC according to this disclosure.
Figure 9 illustrates another example SOC according to this disclosure.

### DETAILED DESCRIPTION

To provide more efficient computing systems, semiconductor manufacturers tend to package various electronic components on the same package (also referred to as an "SoC" or "SOC"). This approach can save physical space since a single semiconductor package is provided instead of multiple packages, can provide better performance and can consume less power at a lower cost. Multiple packages would be separately powered and/or coupled via physical off-chip wires to allow for inter-component communication, which in turn would require more physical space. This disclosure applies to the processing of data in a multicore SOC processing architecture. Such an SOC comprises a number of central processing units, CPUs, or cores, and a memory. In various cases, an SOC device may include any chip design not specifically directed to any particular market segment. An SOC may be a simple SOC, a companion chip or a complex SOC.

A multicore SOC may in some examples comprise several executing cores, each of which reads and executes program instructions, as several processors. Cores may or may not share caches, and they may in some cases implement message passing or shared-memory inter-core communication methods. In some cases, each core has a dedicated L1 cache. In some cases, various cores share a same L2 cache. In some examples, a homogeneous multicore SOC include only identical cores. In some examples, a heterogeneous multicore SOC comprises cores that are not identical.

In some cases, a specific Interrupt Controller (for example called Global Interrupt Controller in an ARM processor) provides interrupt routing between cores of a multicore SOC, as well as inter-processor interrupts.

RAM (Random Access Memory) and device peripherals (for example UART (universal asynchronous receiver-transmitter) or a network interface) may be in some cases shared between different CPU or cores. In some cases, some memory or device bottleneck may occur when several cores are accessing the same peripheral resource simultaneously.

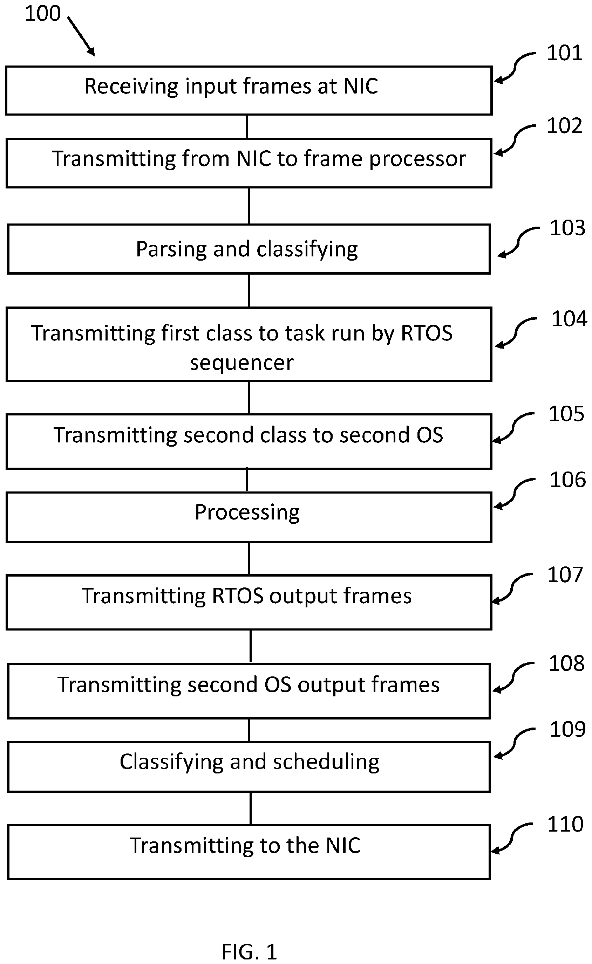

As represented for example in Figure 1, this disclosure applies to a method 100 to process data in a multicore SOC processing architecture comprising receiving, as for example in block 101, input frames at a network interface controller, NIC, of a real time operating system, RTOS, from a medium access controller, MAC, of the SOC, whereby the RTOS is implemented on a first core of the SOC.

An RTOS is an operating system intended to serve real-time processing of data as the data is received. Examples of RTOS include FREERTOS™, RTEMS™, among others. A characteristic of an RTOS is a level of consistency in scheduling and completing a task. As used herein a task may be an operating system operation, which may be invoked by an application executing on the RTOS, or an Interrupt Service Routines (ISR), or the like. The execution time is the time for a single execution of the task. In some cases, the task has an associated deadline within which the task has to be completed. A deadline miss is a scenario where the execution of the task does not get completed before the task's deadline. Alternatively, or in addition, the deadline includes a duration of a certain number of activations of the task. In a hard RTOS, such as one used in an electrical power steering system (EPS), task timing and task deadline play a critical role. According to this disclosure, the RTOS is implemented on a first core of the SOC. In some cases, no other OS is implemented on the first core of the SOC, the only OS implemented on the first core being the RTOS.

An RTOS may be particularly suited to processing tasks related to a real time system. A real-time system may be considered as a set of interactive real-time processes, each real-time process producing some reactions in response to external events in a finite time, meaning before a deadline.

Systems may be classified in one of the following categories:
- Non Real Time. A non-real time system is a system where there are no deadlines involved. An RTOS is not a Non Real Time system according to this disclosure.
- Soft Real Time. A Soft Real Time system is a system where not meeting a deadline may have undesirable effects but may be tolerated by the system, for example leading to a performance degradation. In other words, a Soft Real Time system may meet a deadline in an average case. The Linux OS Kernel may for example be classified as pertaining to this category because it implements FIFO (first in, first out) or Round Robin process scheduling. An RTOS is not a Soft Real Time system according to this disclosure.
- Firm Real Time. Infrequent deadline misses are tolerable, but may degrade the system quality of service. The system may survive task failures so long as they are adequately spaced. A Firm RT (Real Time) system is for example a soft RT system which was improved to approach hard real time. Most of the time, there is no strict deadline guaranteed by the system. Linux kernel with PREEMPT_RT patch, or Xenomai are part of this category. An RTOS is not a Firm Real Time systems according to this disclosure.
- Hard Real Time. A Hard Real Time system is a system where not meeting a deadline can have critical effects. Real-Time OS (RTOS) such as FreeRTOS or RTEMS are part of this category. In some cases, unlike an OS such as Linux, they provide relatively few services, such few services being in some cases related to task/process scheduling and interruption. An RTOS may be a Hard Real Time system.
- Absolute real-time. An absolute Real Time system is a system where the response time to external events is fixed and remains the same (within a few ns or nano seconds). Some programmable hardware based systems such as FPGA (field-programmable gate array) or CPLD (complex programmable logic device) are in this category. An RTOS is not an Absolute Real Time system.

An RTOS may in some cases achieve an appropriate performance by careful implementation of an interrupt process. An RTOS may in some cases achieve a maximum latency of several µs depending on a CPU speed and on the complexity of peripheral devices which generate HW (Hardware) interrupts. In some cases, an RTOS supports a limited set of task which may be generally defined statically and bound to the RTOS. The RTOS may in some cases not provide services such as a file system, or a memory manager. In some cases, the complexity of applications supported by an RTOS is limited. In some cases, the time and cost required to develop, test and/or maintain RTOS applications is higher than maintaining application using a generic OS such as an OS comprising a kernel space and a user space.

A medium access controller, MAC, provides a functionality for controlling access to a physical transmission medium. Some of the MAC functionalities may be implemented in software running on a processor. In some cases, MAC functionalities concerning user data plane, in particular transmission to or reception from a PHY Ethernet (Ethernet physical layer component), are implemented in hardware. A MAC may be implemented on a substrate as discrete logic, memory, microprocessor, and/or combinations thereof. A MAC may be arranged for performing functions of encryption/decryption, segmentation/reassembly of packets, channel access (e.g., including arbitration), and address filtering. In some examples, a MAC comprises an Ethernet Medium Access Controller (EMAC) peripheral compliant with IEEE standards such as 10BASE-T/100BASE-TX 802.3 for Ethernet MAC and support 10/100 Mbps data transmission rates. In some cases, a EMAC may support IEEE 802.1Q VLAN tag detection. In some cases, a EMAC may support IEEE1588-2008 for precision networked clock synchronization or gigabit speed. In some cases, a EMAC support some IEEE TSN extensions such as IEEE 802.1qbv (time aware scheduler), or a time-based emission (i.e. a capability to transmit a frame at a given time).

A network interface controller (NIC) block is in charge of managing MAC queues used for reception and transmission of messages. It buffers input and output messages and provides a high-level interface. In addition, a NIC may collect local computing resource message statistics. This may involve keeping track of the number of messages sent, received and blocked. A role of the NIC may be to provide the RTOS with a unified view the communication resources. For instance, message statistics collected in a NIC may be processed and communicated to the first core of the SOC, on which the RTOS is implemented, by the NIC. A NIC may in some examples be considered as a distributed part of the RTOS.

In some cases, the method according to this disclosure may be applied in the context of Ethernet TSN requirements. TSN corresponds to the IEEE 802.1 defined standard technology to provide deterministic messaging on standard Ethernet. Providing on-time delivery of Real-Time (RT) frames (such as related to RTOS tasks) may be according to IEEE 802.1Qbv standard. IEEE 802.1Qbv defines relates to transmitting certain TSN Ethernet frames on a schedule, while allowing non-RT Ethernet frames (such as related to non RTOS tasks) to be transmitted on a best effort basis around the RT frames (related to the RTOS tasks). In a case where all network nodes are synchronized, IEEE 802.1 Qbv may deliver critical communication (related to the RTOS tasks) very quickly and with a very low jitter in delivery. The different TSN standards defined by IEEE 802.1 group may be grouped in three component categories:
- Time synchronization: time in TSN networks may be distributed from one master source to all the network nodes. In some cases, this is done using the IEEE 1588 Precision Time Protocol standard, which utilizes Ethernet frames to distribute time synchronization information.
- Scheduling and traffic shaping: Scheduling and traffic shaping allows for the coexistence of different traffic classes with different priorities on a same network. TSN may enhance an Ethernet communication by adding mechanisms to ensure timely delivery with soft and hard real-time requirements.
- Selection of communication paths, path reservations and fault-tolerance mechanisms.
In some cases, focusing on the scheduling component, for different priorities, a user may select from different access control and scheduling mechanisms how Ethernet frames are processed. Thereby, some priority may be assigned to already existing methods (such as the strict priority scheduler defined by the IEEE 802.1Q standard) or some new processing methods, such as the time-aware traffic scheduler defined by the IEEE 802.1Qbv standard. This time-aware scheduler is designed to separate the communication on the Ethernet network into fixed length, repeating time cycles. Within these cycles, different time slices may be configured that may be assigned to one or several of Ethernet priorities. Using to that mechanism, it is possible to grant exclusive use to the Ethernet transmission medium for those traffic classes that have stringent real-time constraints (such as RTOS tasks). This exclusive access eliminates buffering effects in the Ethernet switch transmission buffers and time-critical traffic (such as related to RTOS tasks) may be transmitted without nondeterministic interruptions. Time slices may be considered as virtual communication channels, and may enable the separation of time-critical communication (related to RTOS tasks) from non-critical background traffic (related to non RTOS tasks).

The MAC and NIC are implemented on the SOC according to this disclosure. The MAC and NIC are processing input frames which comprise digital data to be processed, the input frame being input from a component external to the SOC. As hereby described, the routing at the SOC of the input frames goes from the MAC of the SOC to the NIC of the SOC. In some examples, the input frames are input from a component external to the SOC directly to the MAC of the SOC. The component external to the SOC may be a bus. In some examples, the input frame is directly routed from the MAC to the NIC.

According to this disclosure as represented for example on Figure 1, the input frames are transmitted, as for example in block 102, from the NIC of the RTOS to a frame processor of the RTOS. Routing the input frames up to a frame processor of the RTOS will enable RTOS control on the processing of the input frames. Proceeding in this manner ensures that input frames requiring a time sensitive treatment do reach the RTOS. In some examples, all frames input to the SOC are transmitted to the MAC of the SOC, to the NIC of the SOC and to the frame processor of the RTOS, in this order. Input frames which may be related to a processing by the second OS would according to this disclosure also be routed to the frame processor of the RTOS. Such a process enables handling tasks by a generic OS such as the second OS without jeopardizing the processing of time sensitive tasks by the RTOS.

According to this disclosure as represented for example on Figure 1, the input frames are submitted, as for example in block 103, to parsing and classifying at the frame processor according to a classification comprising at least a first class related to RTOS tasks and a second class related to non RTOS tasks. In some cases, parsing comprises providing a structural representation of the data provided in the input frame. The classifying of the input frames according to a classification comprising at least a first class related to RTOS tasks and a second class related to non RTOS tasks permits separating in at least two different categories input frames in function of their time sensitivity. In some cases, two classes may be sufficient to separate input frames between particularly time sensitive tasks for further treatment by the RTOS and not so time sensitive tasks for treatment by the second OS. In some examples, additional classes may be provided in order to increase granularity of the classification.

According to this disclosure as represented for example on Figure 1, the input frames classified in the first class are transmitted, as for example in block 104, from the frame processor to one or more tasks run by a sequencer of the RTOS. Such one or more tasks run by the sequencer of the RTOS are RTOS tasks. The sequencer may control or step the processor on which the RTOS is implemented from one microinstruction to another, thereby leading to processing the input frames classified in the first class in an order determined by the sequences. Such processing may ensure that the time sensitivity of tasks related to such input frame be complied with. In some examples using more than two classes, input frames classified in some other classes may be transmitted to one or more tasks run by the sequencer of the RTOS. Input frames classified in the second class should not be transmitted to the one or more tasks run by the sequencer of the RTOS in order to avoid using the processing power of the RTOS for non time sensitive tasks. Such input frames classified in the second class are therefore handled by the second OS.

According to this disclosure as represented for example on Figure 1, the input frames classified in the second class are transmitted, as for example in block 105, from the frame processor to a network device driver of a second operating system, OS, implemented on a second core of the SOC, the second OS comprising a kernel space and a user space. The second OS is in some examples an OS suitable for general use of computing tasks, i.e. is not an OS reserved for handling time sensitive tasks such as an RTOS. This is a reason why the second OS comprises a kernel space and a user space. The second OS may implement a variety of applications, in particular on its user space. The second OS comprises a network device driver which allows interfacing the second OS with, for example, the frame processor of the RTOS. The frame processor of the RTOS may indeed be considered as a selective filter directing input frames either for processing by the RTOS when particularly time sensitive, or for processing by the second OS otherwise. In some examples, the RTOS is dedicated to processing time sensitive tasks and the RTOS does not comprise a user space. In some examples, the RTOS runs applications in a RTOS kernel space, thereby providing increased control of the RTOS to the applications run onto the RTOS and reducing or even preventing interruptions when running on the RTOS. This differs from the second OS which does comprise a user space, thereby limiting the control of application running on the user space of the second OS onto interruptions which may be controlled on the kernel space of the second OS. The second OS is implemented on the SOC, and is therefore implemented on the same SOC as the RTOS, but the second OS is implemented on a second core of the SOC, and therefore on a core different from the first core on which the RTOS is implemented. This avoids priority conflicts between the processing available to the second OS and to the RTOS. The cores of the SOC may be of a same type, or may be of different types.

According to this disclosure as represented for example on Figure 1, the input frames transmitted to one or more tasks run by the sequencer of the RTOS are processed on the first core and the input frames transmitted to the network device driver of the second OS are processed on the second core, as for example in block 106. In some examples, the RTOS and the second OS function in parallel on their different cores. While the RTOS controls, through its NIC and its frame processor, the dispatching, or assigning, of input frames and related tasks between the RTOS and the second OS, the RTOS and the second OS handle their tasks independently once assigned by way of the classification as per this disclosure. This independent processing avoids conflicts which otherwise could either impact time sensitive tasks, or introduce undue delay for tasks which are not as time sensitive.

According to this disclosure as represented for example on Figure 1, output frames related to RTOS tasks are transmitted from one or more tasks run by the sequencer of the RTOS to the frame processor, as for example in block 107. Such output frames comprise digital data resulting from the processing of tasks by the RTOS onto a core such as the first core on which the RTOS is implemented. In some cases, an output frame may correspond to or be triggered by the processing of a specific input frame, but this is not necessarily the case. The frame processor is, as per this disclosure, the frame processor of the RTOS. This is consistent with the controlling of the frame flow by the RTOS as per this disclosure.

According to this disclosure as represented for example on Figure 1, output frames generated by non RTOS tasks are transmitted from the network device driver of the second OS to the frame processor, as for example in block 108. Such output frames comprise digital data resulting from the processing of tasks by the second OS onto a core such as the second core on which the second OS is implemented. Again, in some cases, an output frame may correspond to or be triggered by the processing of a specific input frame, but this is not necessarily the case. Again, the frame processor is, as per this disclosure, the frame processor of the RTOS. This is consistent with the controlling of the frame flow by the RTOS as per this disclosure, even for output frames originating from the second OS.

According to this disclosure as represented for example on Figure 1, output frames are classified and scheduled at the frame processor, as for example in block 109. This implements the centralizing role of the frame processor of the RTOS at the output frame level. Indeed, in some examples, all output frames, including all output frames originating from both the RTOS and the second OS, are routed to the same frame processor of the RTOS. This ensures that output frames related to particularly time sensitive tasks be classified and schedules accordingly, thereby avoiding undue delays.

According to this disclosure as represented for example on Figure 1, the scheduled output frames are transmitted from the frame processor to the NIC and from the NIC to the MAC, as for example in block 110. This completes the processing of both RTOS and second OS tasks onto the SOC, the processing of such tasks being centrally controlled by the RTOS frame processor, both on input and output.

In some cases, the RTOS is implemented on additional first cores of the SOC. This may for example permit accelerating the processing block 106. In some examples, the frame processor of the RTOS is controlled by a single one of the first cores on which the RTOS is implemented. The second OS may not be implemented on first cores on which the RTOS is implemented. Any additional first core may be the same as the first core or differ from the first core or from other additional first cores.

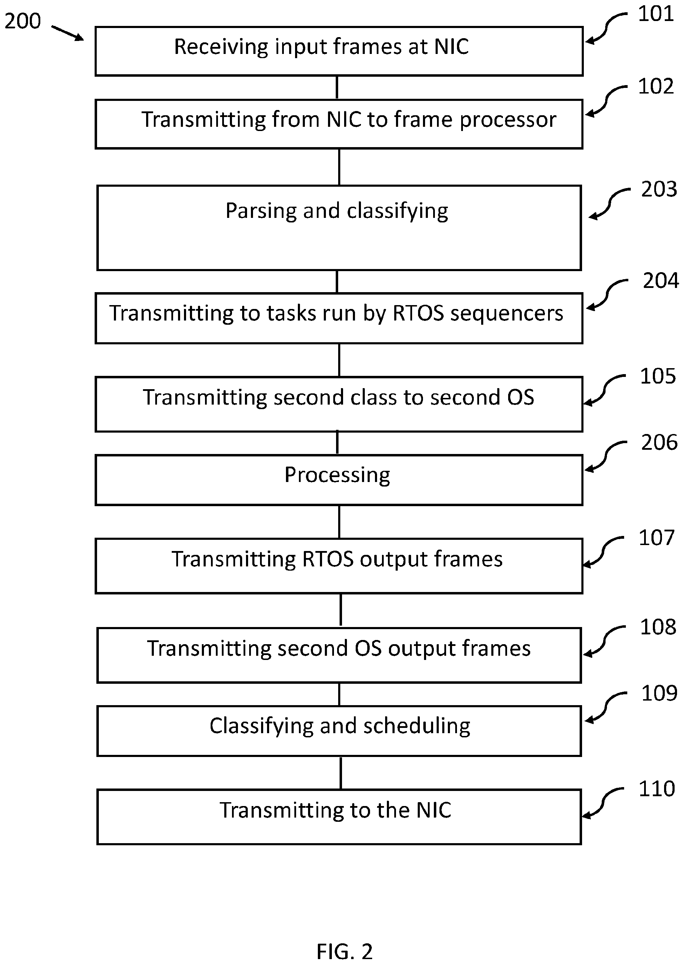

In some cases, such as represented for example on Figure 2, a method 200 according to this disclosure comprises the blocks 101-102 as described in Figure 1 as well as parsing and classifying the input frames at the frame processor according to the classification comprising one or more other classes related to other RTOS tasks, as per block 203 for example. Introducing such one or more other classes permits introducing additional granularity to the classification. In this example, the method further comprises transmitting input frames classified in the one or more other classes from the frame processor to one or more tasks run by one or more dedicated other sequencers of one or more dedicated other RTOS, whereby the one or more dedicated other RTOS are implemented on one or more dedicated core of the SOC. This permits leveraging the additional granularity provided by the one or more other classes to parallelize the processing of RTOS related tasks onto different RTOS implemented on the same SOC. While several RTOS may be in a position to process RTOS tasks on the SOC in this example, a single RTOS is associated to the frame processor according to this disclosure in order to maintain a centralize handling of the frames. In this example the input frames classified in the first and one or more other classes are transmitted to one or more dedicated tasks run by sequencers of the various RTOS of the SOC as illustrated for example in block 204. In this specific example, the second class remains linked to non-RTOS tasks and such non-RTOS tasks are transmitted to the network device driver of the second OS as per block 105. In this case, the processing takes place, as illustrated by block 206, on one hand on the second OS for non RTOS tasks, and on the other hand on the various RTOS respectively corresponding to the first and one or other classes. While, in this example, each RTOS of the SOC has a corresponding class assigned to it, in other cases a specific RTOS may handle different classes, and different RTOS may handle a single class, as long as such classes corresponding to a RTOS correspond to RTOS tasks classified as particularly time sensitive. The following steps of the method 200 are similar to steps 107-110, whereby all RTOS as well as the second OS of the SOC transmit their corresponding output frames back to the same frame processor assigned to a specific RTOS in order to maintain the centralized treatment of frames as per this disclosure.

In some examples, the second OS is implemented on additional second cores of the SOC. This permits benefiting from additional processing power for the second OS. This implementation of the second OS has however no direct impact on the centralized handling of frames by the frame processor of the RTOS. In other words, tasks handled for the second OS on different second cores are related to input frames originating from the same frame processor, and are related to output frames transmitted to the same frame processor. In this example, the second cores on which the second OS is implemented are not used for implementing an RTOS. In other words, no core present on the SOC may implement both an RTOS and a second OS.

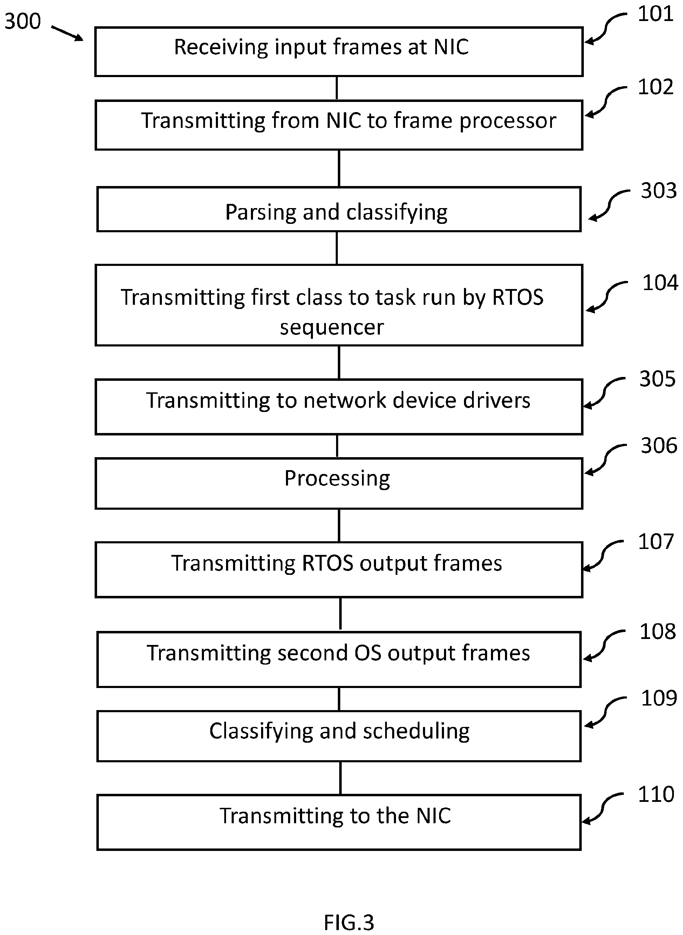

In some cases, such as represented for example on Figure 3, a method 300 according to this disclosure comprises the blocks 101-102 as described in Figures 1 or 2 as well as parsing and classifying the input frames at the frame processor according to the classification comprising one or more other classes related to non RTOS tasks, as per block 303 for example. Introducing such one or more other classes permits introducing additional granularity to the classification. In this example, the method further comprises transmitting input frames classified in the one or more other classes from the frame processor to one or more dedicated other further network device drivers of one or more dedicated further OS implemented on one or more dedicated further cores of the SOC, the one or more dedicated further OS comprising a dedicated further kernel space and a dedicated further user space. This permits leveraging the additional granularity provided by the one or more other classes to parallelize the processing of OS related tasks onto different OS implemented on the same SOC. Such further OS each comprise both a kernel and a user space permitting a functioning similar to the functioning of the second OS according to this disclosure. Such one or more further OS in addition to the second OS may be in a position to process non RTOS tasks on the SOC in this example. In this example the input frames classified in the second and one or more other classes are transmitted to dedicated network device driver of the various OS of the SOC as illustrated for example in block 305. In this specific example, the first class remains linked to RTOS tasks and such RTOS tasks are transmitted to one or more tasks run by the sequencer of the RTOS as per block 104. In this case, the processing takes place, as illustrated by block 306, on one hand on the second OS and one or more further OS for non RTOS tasks respectively corresponding to the second and one or other classes, and on the other hand on the RTOS for tasks corresponding to the first class. While, in this example, each OS of the SOC has a corresponding class assigned to it, in other cases a specific OS may handle different classes, and different OS may handle a single class, as long as such classes corresponding to a OS correspond to OS tasks not classified as particularly time sensitive. The following steps of the method 300 are similar to steps 107-110, whereby all OS (including the second OS) as well as the RTOS of the SOC transmit their corresponding output frames back to the same frame processor assigned to a specific RTOS in order to maintain the centralized treatment of frames as per this disclosure.

While not illustrated, examples combining the structures illustrated by figures 2 and 3 may be considered. Such examples may apply to a SOC comprising not only several OS each comprising a kernel space and a user space, but also several RTOS, whereby each RTOS and each OS comprising a kernel space and a user space are assigned at least one dedicated core of the SOC. In such structures, and according to this disclosures, while numerous classes may be considered for classification of input frames and output frames in function of time sensitivity of associated tasks, such classification would remain under control of a single frame processor comprised in a single RTOS of the SOC.

In some examples, the method according to this disclosure further comprises receiving, at the network device driver of the second OS, input frames exclusively transmitted from the frame processor of the RTOS. This may for example apply to anyone of the methods 100, 200, 300 hereby described, as well as methods combining features hereby described. Such a constraint on the routing of input frames ensures that such routing remains under control of the frame processor of the RTOS, thereby helping ensuring that time sensitive tasks may be treated appropriately and timely transmitted for processing by an RTOS of the SOC.

In some examples, the method according to this disclosure further comprises transmitting, by the network device driver of the second OS, output frames exclusively to the frame processor of the RTOS. This may for example apply to anyone of the methods 100, 200, 300 hereby described, as well as methods combining features hereby described. Such a constraint on the routing of output frames ensures that such routing remains under control of the frame processor of the RTOS, thereby helping ensuring that time sensitive tasks may be treated appropriately and timely transmitted to a component external to the SOC after processing by an RTOS of the SOC according to this disclosure.

In some examples, the method according to this disclosure further comprises sharing, by the RTOS and by the kernel of the second OS, a buffer storing frame data. This may for example apply to anyone of the methods 100, 200, 300 hereby described, as well as methods combining features hereby described. Such a sharing of a buffer storing frame data may result particularly efficient considering that the second OS and the RTOS are comprised on a same SOC. Such buffer storing frame data may indeed also be comprised on the same SOC. Such sharing may apply also to one or more further OS and/or one or more further RTOS comprised on the SOC as per this disclosure.

In some examples, the method according to this disclosure further comprises preventing access to an RTOS buffer storing frame data from the second OS. This may for example apply to anyone of the methods 100, 200, 300 hereby described, as well as methods combining features hereby described. Preventing access to an RTOS buffer from the second OS may for example contribute to ensuring a desired level of security for RTOS tasks. Such selective access control may apply also to one or more further OS and/or one or more further RTOS comprised on the SOC as per this disclosure, whereby each OS, or each RTOS, or groups of OS or groups of RTOS may have exclusive access to a specific buffer.

In some examples, the method according to this disclosure further comprises attaching, by the frame processor, a stream class identifier to the input frames according to classification rules; and passing the input frame and attached stream class identifier to a queue identification module of the frame processor. This may for example permit organizing the forming of queues prior to the processing by the different cores of the OS corresponding to the RTOS, second OS or further RTOS or OS. Such attaching and passing may for example be comprised in blocks 103, 203 or 303 of illustrated methods 100, 200 and 300.

In some examples of methods according to this disclosure, the frame processor is applying dynamically defined classification rules. Such dynamic definition of such rules may for example take place using one or more of a feedback mechanism from the RTOS, a feedback mechanism from the second OS, a feedback mechanism from a component of the SOC, or a feedback mechanism from a component external to the SOC. Such dynamically defined classification rules may for example adjust priorities in order to gain overall flexibility. In some examples, dynamically defining classification rules will comprise changing a number of classes. In some examples, dynamically defining classification rules will comprise reducing a number of classes. In some examples, dynamically defining classification rules will comprise increasing a number of classes. In some examples, either one or both of the kernel of the second OS and applications of the RTOS are contributing to dynamically defining the classification rules. For examples, if an application running over the second OS needs to receive and transmit data with a specific transport protocol and some Quality of Service (QoS) requirement, a new class may be assigned to this transport protocol with a priority that ensures a sufficient QoS. Such dynamically defined classification rules may be applied to any of the methods hereby describes, including methods 100, 200 and 300 for example.

In some examples of methods according to this disclosure, the classifying and scheduling the output frames at the frame processor comprises attaching, by the frame processor, a stream class identifier to the output frames according to classification rules; and applying scheduling rules to the output frames depending on both time and priority of the attached stream class of the output frames for frame transmission of the scheduled output frames. This may for example permit organizing the forming of queues following the processing by the different cores of the OS corresponding to the RTOS, second OS or further RTOS or OS. Such attaching and applying may for example be comprised in block 109 of illustrated methods 100, 200 and 300.

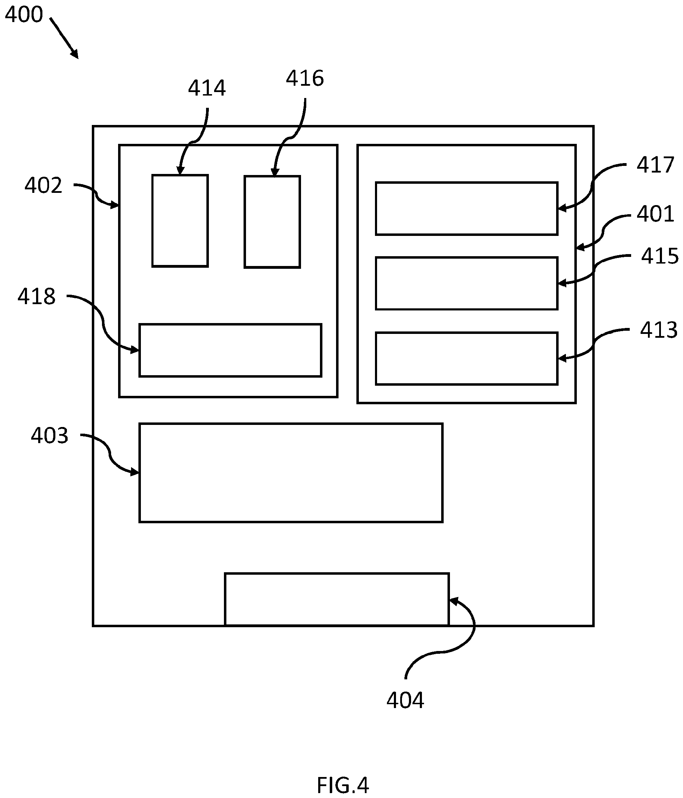

Figure 4 illustrates an example multicore system-on-chip, SOC, device 400 comprising processing cores 401 and 402 and a memory 403, the processing cores 401 and 402 being configured to operate according to any one of the methods hereby described. In an example, processing core 401 is the first core of the SOC 400, implementing the RTOS. In this example, processing core 402 is the second core of the SOC 400, implementing the second OS comprising a kernel space 414 and a user space 416. In this example, the SOC comprises a MAC 404 to transmit input frames from a component (not represented) external to the SOC and to a NIC 413 of the RTOS implemented on the first core 401. The input frames are routed according to the methods of this disclosure from the NIC 413 to the frame processor 415 of the RTOS implemented on the first core 401. The frame processor 415 transmits, according to the method of this disclosure, input frames to either one or more tasks run by the sequencer 417 of the RTOS implemented on the first core 401 or to the network device driver 418 of the second OS implemented on the second core 402, according to the methods of this disclosure.

Figure 4 also illustrates a computer storage medium such as memory 403 comprising instructions which, when executed by processing cores such as 401 and 402 of a multicore SOC device such as 400, cause the processing cores 401 and 402 to carry out any one of the methods hereby described. Processors or processing cores 401 and 402 may comprise electronic circuits for computation managed by an OS or RTOS running on the processor or processing core.

A computer readable storage according to this disclosure may be any electronic, magnetic, optical or other physical storage device that stores executable instructions. The computer readable storage may be, for example, Random Access Memory (RAM), an Electrically Erasable Programmable Read Only Memory (EEPROM), a storage drive, and optical disk, and the like. As described hereby, the computer readable storage may be encoded with executable instructions according to the methods hereby described.

Storage or memory may include any electronic, magnetic, optical or other physical storage device that stores executable instructions as described hereby.

In some examples according to this disclosure, the cohabitation on a single SOC of services and applications with heterogeneous network QoS (quality of Service) requirements, security constraints and implementation complexity is addressed. In some cases, in a single SOC, some applications may have strong real-time constraints, meaning for example that they cannot support a latency greater than several µs when they a network event occurs (e.g. reception of a message). This kind of application is in this case implemented over a RTOS to obtain a very low latency. The SOC may also support other applications which do not have real-time requirement, or have soft real-time requirements. Those other non RTOS applications may involve frequent update, may be extended by software plug-ins and includes a number of user functions. Such application may be implemented on a so called generic OS, generic in that it is not an RTOS, but has a kernel space and a user space. Such a generic OS is an example of second OS according to this disclosure.

Some application requirements may not be satisfied by the exclusive use of either a generic OS (such as Linux or VxWorks) or an RTOS. Such applications would indeed comprise both time sensitive aspects for handling by an RTOS, and complex less time sensitive aspects (for example requiring a user space) not suitable for handling by an RTOS alone. Examples comprise control network latency applications, security applications, multiple protocols stack applications, or integration/abstraction of HW Ethernet interface with heterogeneous capabilities (for example comprising TSN functions).

An example of environment in which the method of this disclosures may be used is an industrial communication device acting as a slave receiving commands from a Programmable Logic Controller. Such a device may be connected to the PLC through an Ethernet communication network in a daisy-chain topology. Such a device may integrate the following services and applications with RT (real time) requirements indicated in brackets:
- Industrial network protocol communication stack with periodic communication and strong QoS constraints (latency, jitter) (e.g. PubSub TSN) [hard RT]
- Industrial processing control [hard RT]
- L2 Ethernet switching [hard RT]
- Network management protocols (e.g. TSN management) and applications (e.g. web server for configuration/management) [non RT]
- Industrial Network management protocols (e.g. OPC-UA client/server, OPC-UA meaning Open Platform Communications Unified Architecture) [non RT]
- Third party edge computing processes [soft RT, non RT]

In some cases, the methods according to this disclosure permit implementing critical applications having heterogeneous network QoS and security requirements over a generic hardware platform with a single multicore processing unit. In some cases, the method relies on the simultaneous usage of a generic Operating System (such as Linux or VxWorks) as second OS and a RTOS, by combining the advantage of each execution environment for applications. Each of the second OS and the RTOS runs over a predetermined set of cores. In some cases, the second OS and the RTOS share the same memory space. In some cases, the second OS and the RTOS share the same network interfaces such as the MAC of the SOC and the NIC of the RTOS. Such sharing of integrated network peripheral devices may provide faster performance and/or increased security. The RTOS implements in some cases the SW (software) block (Network Interface Controller) related to the management of the HW network interfaces, which is for example done in a generic OS Network Driver.

In some cases, in receiving input frames, frame parsing and classification is implemented for HW network interfaces which would otherwise not support such a feature (Rx-Proc sub-block for example). Priority for Ethernet frame processing required to support network applications with different real-time constraints may be introduced.

When transmitting output frames, in some cases, a frame classifier supporting multiple emission queues is provided. The frame classifier may be coupled with a frame emission scheduler which may allow SW implementation of priority or time-aware schedulers such as those defined in IEEE 802. 1Qbv, for example with standard HW network interfaces. Such frame classifier and scheduler may be included in a Tx-Proc sub-block.

In some cases, a generic OS network driver is provided which may allow a second OS application to use the network interfaces managed by the RTOS. This driver may be able to receive some Ethernet frame from a RTOS Rx-Proc sub-block, and to transmit Ethernet frame to a Tx-Proc. Both following example schemes may address the RTOS and generic OS network interface sharing:
- one scheme allowing direct accesses to a RTOS managed-memory allowing fast transfer for generic OS (or second OS) services and applications.
- one scheme applying data copy and restriction to RTOS memory access by the generic OS (or second OS), enforcing security for critical network tasks running over the RTOS.

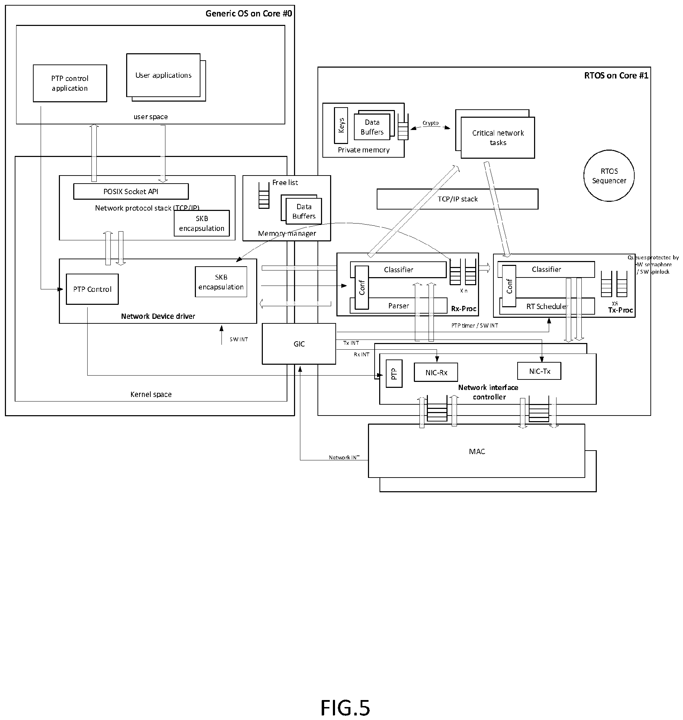

An example of a multicore SOC device according to this invention is represented on Figure 5. In this example a generic OS (also named second OS in this disclosure) and one or more RTOS share the same network interfaces. The repartition of CPU cores dedicated to the generic OS and RTOS is in this example statically defined. While represented as linked to core #0, the Generic OS may use SMP (Symmetric Multiprocessing) to dynamically schedule different kernel and application processes over two or more CPU cores. A separate RTOS may be deployed over a number of dedicated cores (comprising core #1 of Figure 5), running a list of tasks that are attached and run over the one or more cores dedicated to the RTOS. Alternatively, a single RTOS may be deployed over a set of cores dedicated to RTOS. In such a case, the selected RTOS, such as FreeRTOS for example, may support SMP mode. Both the RTOS and the second or generic OS share in this case the same memory space so that RTOS tasks and generic or second OS kernel have access to queues, frame metadata and the content of a frame data buffer. A network memory manager running in the generic or second OS is in this example in charge of managing this shared memory space, in particular providing free data buffer to store received frame or frame to be transmitted, i.e. input frame.

In a first case, some memory areas may be shared between the generic OS and the RTOS so that content of the frame data buffer manipulated by the NIC in the RTOS may be accessed by the OS network device driver. In such a case, no data copy is required which provides better performance for applications running in the generic OS. In a second case, frame data buffer may be stored in a private memory area to re-enforce security, in particular for non-encrypted protocol managed by the RTOS that may carry sensitive information. In that case, an additional copy step may be required when receiving data frame (input frame) intended for the generic OS and classified accordingly at the frame processor.

In the example illustrated in Figure 5, the HW network interfaces (MAC interfaces) are controlled by the RTOS. When the number of cores allocated to the RTOS is greater than one, then a single RTOS core may be designated to control the network interfaces as a single NIC. Each NIC includes in this case a Reception Processing (NIC-Rx for processing input frames) and a Transmission Processing (NIC-Tx for processing output frames) block in charge of managing HW queues used for reception/transmission of, for example, an Ethernet block. Such processing may comprise manipulating some Buffer Descriptors (BDs) containing metadata related to received (input) or transmitted (output) frames.

In the example illustrated in Figure 5, The Rx Processing block (Rx-Proc, part of the frame processor according to this disclosure) includes a network protocol parser (Ethernet/high layer such as TCP/IP/industrial protocols) in charge of analyzing the received Ethernet frames, or input frames. Based on the parsing result, each frame is classified and put in a given queue. Using the Rx-Proc configuration sub-block, parsing rules may be dynamically defined/adjusted, as well as the queues used to store received input frames after the classification process. Queues may be dedicated to either tasks running over the RTOS, or to applications or protocol stacks running over the generic or second OS. In some cases, queues may only include metadata related to the frames, avoiding any data copy. Using some dedicated queues for the traffic processed by some specific RTOS tasks allows to manage different processing priorities for supported applications and services. Thus, the RTOS sequencer, ensures that tasks with higher priorities will process received frames (input frames) before tasks with lower priorities. This would not be the case if a single queue would be used.

In the example illustrated in figure 5, a queue dedicated to RTOS tasks is then polled by the corresponding RTOS tasks to retrieve incoming network data frames. A TCP/IP stack or any other protocol stacks may be inserted in this scheme so that different RTOS application tasks may share a single transport protocol. Queues dedicated to traffic intended to the generic or second OS applications or protocol stacks (i.e. related to non RTOS tasks) are polled by the generic or second OS network device driver. Data frames are then for example encapsulated into generic OS network buffers (named socket buffers or SKB in Linux), respecting the generic (second according to this disclosure) OS network device API (Application Programing Interface).

In the example illustrated in Figure 5, the transmission processing (Tx-Proc) block (comprised in the frame processor according to this disclosure) includes a set of transmitting queues that stores metadata related to pending frames sent by either RTOS applications or by the generic or second OS network device driver, waiting for transmission as output frames. When using for example TSN extensions, different scheduling strategies may be used to determine network frame priorities. For instance, some implementations of the IEEE 802.1Qbv standard may be based on the classification among 8 Traffic Classes (TC) using 8 respective transmission queues. In some cases of methods according to this disclosure, a number of queues correspond to a number of classes. Other implementations may rely on stream classification (a stream may be the association of a destination address and a VLAN, Virtual Local Area Network, ID, identifier) with constrains to allocate a dedicated queue for each stream. The classifier sub-block (comprised in the frame processor according to this disclosure) is in this case in charge of selecting the queue where the sending frame or output frame may be stored before emission or transmission. To perform this task, the classifier may use some metadata related to the frame such VLAN priority, stream identifier, etc... For instance, if the classifier supports Traffic Classes, it may use the VLAN PCP (Priority Code Point) and a mapping table to select which Traffic class is associated to a given PCP. The RTOS sequencer is in charge of controlling the emission of an output frame in order to respect the adopted scheduling strategy. For instance, if the time-aware scheduler defined by the IEEE 802.1Qbv standard is enabled, output frames shall be emitted in a specific time-window. It means that the scheduler should be able to send frame at a specific time. Due to the use of the RTOS, it is possible to achieve a fair accuracy (<1µs) by combining timer based on PTP (Precision Time Protocol) clock and fine queue management which may be sufficient for numerous applications. Classification and mapping rules, as well as scheduling parameters may be defined dynamically through the Tx-Configuration submodule.

In the example illustrated in Figure 5, interrupts related to the HW network interfaces are managed by the Global Interrupt Control module (GIC as named for example in an ARM architecture). This module may be programmed in such a way that network interrupts be routed to the RTOS core running the network interface controller.

In the example illustrated in Figure 5, RTOS tasks may be created dynamically and scheduled by priority by the RTOS sequencer. A RTOS task may receive data frame or input frame by polling the defined queue in the RTOS-Rx Block. It may also send a data frame or output frame by sending them to the RTOS-Tx block. Task processing may be triggered by the reception of a data frame (input frame) or by an internal timer.

In the example illustrated in Figure 5, a PTP protocol is used to synchronize the local clock to a network clock. PTP time control protocol does not require some real-time functions because it is based on hardware frame timestamping to achieve a very good precision (<100ns). When frames are received (input frames) or transmitted (output frames), the MAC adds the reception/transmission time to the frame metadata. In some examples, MAC supporting IEEE 1588 functions also provides HW timers triggered by the PTP clock. Although the PTP control application (used to adjust PTP time clock) is in this case running over the generic or second OS (because of flexibility in term of protocol, servo control algorithm and portability for example), the PTP timestamping process may be supported by the RTOS in order to get the reception/transmission time and report them to the generic OS through the queue mechanism. PTP timer control is also implemented in this example on the RTOS side.

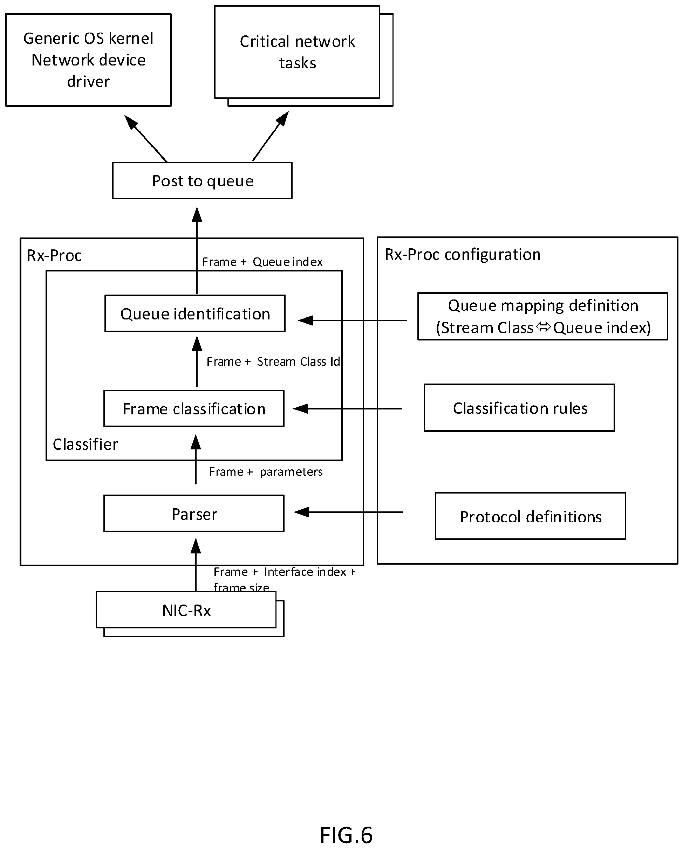

Figure 6 illustrates an example of a portion of a frame processor according to this disclosure. In this example an Rx-Proc block of the RTOS frame processor is in charge of processing an input frame received by the NIC and post them to one of the Rx queue polled by either RTOS tasks (for example a critical network tasks) or the generic or second OS kernel network device driver

The NIC in Figure 6 provides a reference to a buffer that contains input frame data, frame size, and the index (or identifier) of the interface on which the input frame was received.

The input frame is in Figure 6 parsed by the Parser sub-block of the frame processor using the protocol and encoding types defined for example in the Rx-Proc configuration space (such as a list of fields with offset positions and sizes). Relevant parameters such as VLAN ID, IP addresses, TCP (Transmission Control Protocol) or UDP (User Datagram Protocol) ports are extracted when the analyzed protocols are transported over the TCP/IP protocol. Frame data and associated parameters are passed to the Frame Classification sub-block of the frame processor. Parameters are used to classify the input frame by applying classification rules defined in the Rx-Proc configuration space. A Stream-Class Identifier is attached to the input frame as the result of this operation. Frame and Stream Class Id is passed to the Queue Identification sub-block of the frame processor. Stream Class Identifier is used to determine the queue in which the input frame shall be posted for further processing by either one RTOS task or the generic or second OS kernel network device driver.

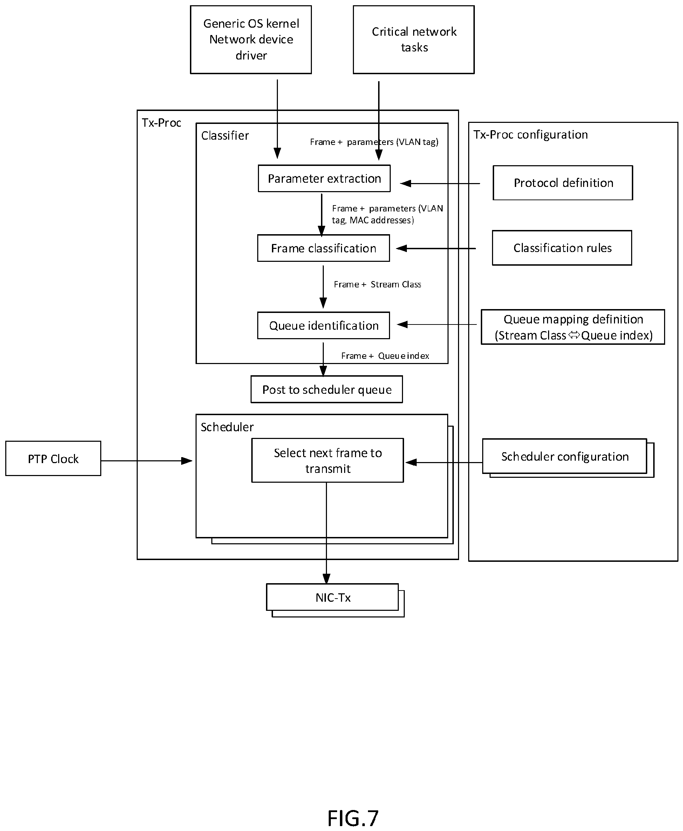

Figure 7 illustrates an example of a portion of a frame processor according to this disclosure, which may for example be combined with the portion illustrated in Figure 6 to form an example frame processor. In Figure 7, the Tx-Proc block of the RTOS frame processor is in charge of processing output frames transmitted by either RTOS network application tasks or the generic or source OS kernel network device driver, and send or transmit the output frames at the right time to one of the NIC of the RTOS. The frame processor includes a frame Classifier and also a frame scheduler for each supported NIC.

In figure 7 the classifier receives output frames posted by the generic or second OS kernel or the RTOS tasks, with associated parameters such as VLAN tag or frame size. Then, the frame processor extracts from the data frame some additional information relevant for output frame classification such as MAC addresses using the Protocol Definitions for example. The Frame Classification sub-block of the frame processor is then able to determine the Stream Class Id from the Classification rules defined in the Tx-Proc configuration space.

In Figure 7, based on the Stream Class Id, a scheduler queue index is determined from the Queue mapping definition defined in the Tx-Proc configuration space. For instance, if the TSN IEEE 802.1Qbv time-aware traffic scheduler is used with 4 Traffic Class (TC), then 4 scheduler queues are defined, one for each Traffic Class. According to some examples of this disclosure, a number of queues equals a number of traffic classes of a scheduler.

In Figure 7, the scheduler configuration contains the type of used scheduler for each NIC, and the associated configuration parameters. In this example, the configuration parameters include a list of open/close gates that define the time periods in which each output frame with a given TC may be emitted or transmitted. The role of the scheduler is in this example to apply defined scheduling rules and select the next output frame to be transmitted to the NIC. When scheduling rules depends on time (such as TSN IEEE 802.1Qbv time-aware traffic scheduler) and not only on priority, the scheduler may be implemented as a RTOS task with high priority. An output frame may then be passed to the NIC at a precise given time based on the PTP clock.

In some cases, security may be handled by appropriate memory management for the multicore SOC. In some cases, the generic or second OS may manipulate some buffer descriptors named SKB to store data frame and some related metadata (packet length). SKB may be allocated/released by the generic or second OS kernel via a module named "network memory manager". Example methods according to this disclosure may support direct frame buffer access from the generic or second OS network device driver, or indirect frame buffer access.

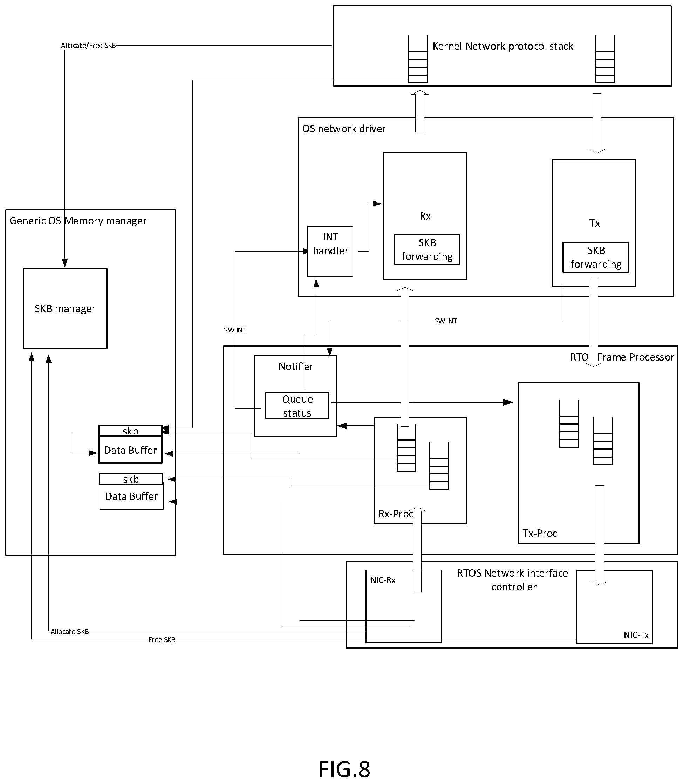

An example of direct buffer access which may be supported by example methods according to this disclosure is illustrated in Figure 8.

In figure 8, direct buffer access takes place in that buffer used to store frame data are shared between the generic or second OS and the RTOS. A benefit is faster data processing since there is no data copy between generic OS and RTOS domain. The RTOS network interface controller may manipulate SKB (or encapsulated input frames) as illustrated in the figure 8. As illustrated for example in Figure 8, the internal queues of the RTOS Frame Processor may store references to SKB, and calling generic (or second) OS Memory manager primitives to make allocation/release of SKB. Those SKB may be directly exchanged between the RTOS and the generic (or second) OS network driver. In reception, SKB allocation may be requested to the second OS memory manager by the NIC-Rx sub-block handling the input frames, filled by the MAC and then passed to the second OS kernel network stack (after parsing/classification by the frame processor), and processed by the generic or second OS. The SKB may then be released by the second OS kernel network protocol stack as encapsulated output frames. In transmission of the output frames, the second OS kernel network protocol stack allocates SKB and send them to the RTOS Frame Processor. The SKB releases are requested to the second OS memory manager by the NIC-Tx sub-block once the Ethernet frame were effectively sent by the network interface. A potential constraint of such an example method may be related to the difficulty of restricting memory access to frame data buffers used by RTOS and the supported applications. This may be relevant when these applications do not support encryptions. Another potential constraint may be to introduce dynamic SKB allocation/release procedure calls in the RTOS which may in some cases not be compatible with RT requirements.

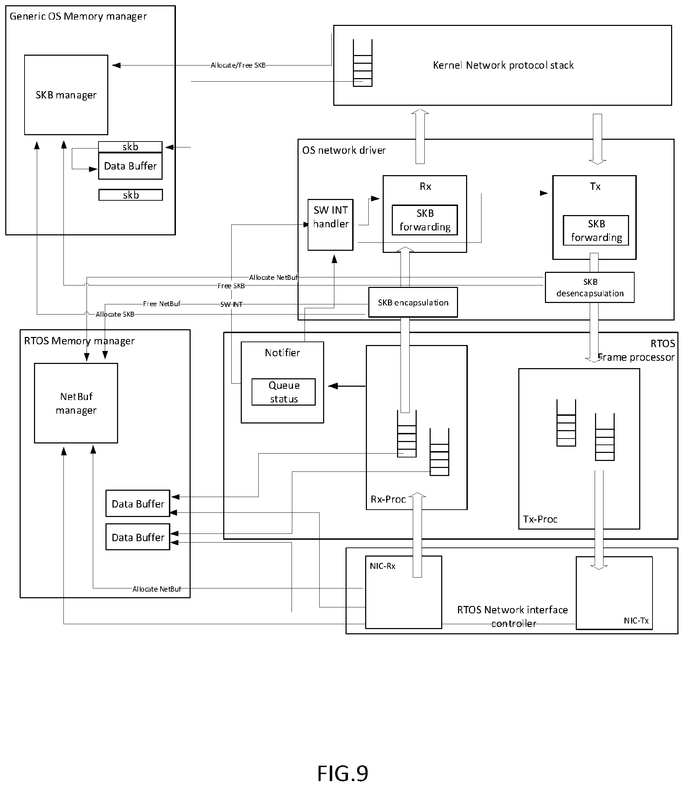

An example of indirect buffer access which may be supported by example methods according to this disclosure is illustrated in Figure 9.

In the example illustrated in Figure 9 of an indirect buffer access scheme, the RTOS Frame Processor deals with Network Buffer (NetBuf) which are exclusively reachable by the RTOS tasks. In this example, a RTOS NetBuf manager is used to manage NetBuf (such as allocation and release operations), and SKB encapsulation/desencapsulation operations of input and output frames are taking place to exchange frames (for example Ethernet frames) with the generic (or second) OS network driver. During such operations, frame data are copied between NetBuf and SKB by SKB Desencapsulation/Encapsulation blocks as shown in Figure 9.

Processing of input frames in the example of Figure 9 comprises NetBuf allocated by the NIC-Rx and filled by the HW MAC upon input frame reception. Such input frames are in this example processed by the Rx-Proc doing parsing and classification operations, and are passed to the OS network driver via queues. Queues stores reference to NetBuf and related metadata (such as packet length for example). A SKB is allocated by the "SKB Encapsulation" sub-block, data being copied from the NetBuf to the SKB, and the NetBuf is released. In this example, in transmission, a NetBuf is allocated by the SKB desencapsulation for any frame being transmitted by the generic OS kernel network protocol stack. Data is copied from the SKB to the NetBuf which is passed to the RTOS Frame Processor (Tx-Proc) as output frame, and a related SKB is released. The NetBuf is released by the NIC-Tx sub-block as output frame once it was transmitted by the MAC.

An advantage of a scheme as illustrated in Figure 9 is that the RTOS memory is private, and may be protected by HW security mechanism such as ARM TrustZone for example. This prevents accessing the Network Buffer from the generic (second) OS side. Another advantage is that routines used for NetBuf allocation/release may be optimized for RT implementation. A possible implementation comprises relying on a static buffer allocation done at setup and on a free buffer list dequeued for buffer allocation, and enqueued when a buffer is released. Such a scheme adds a frame data copy operation for each received input/transmitted output frame by the generic (second) OS. This scheme may be utilized for example when security is a concern, in particular when communication protocols used by RTOS applications are not secured (i.e. no encryption, no authentication). It may also be chosen when applications running over the generic (second) OS have reduced or no performance requirements in term of bandwidth.

## Claims

1. A method to process data in a multicore system-on-chip, SOC, processing architecture comprising:
- receiving input frames at a network interface controller, NIC, of a real time operating system, RTOS, from a medium access controller, MAC, of the SOC, whereby the RTOS is implemented on a first core of the SOC;
- transmitting the input frames from the NIC of the RTOS to a frame processor of the RTOS;
- parsing and classifying the input frames at the frame processor according to a classification comprising at least a first class related to RTOS tasks and a second class related to non RTOS tasks;
- transmitting input frames classified in the first class from the frame processor to one or more tasks run by a sequencer of the RTOS;
- transmitting input frames classified in the second class from the frame processor to a network device driver of a second operating system, OS, implemented on a second core of the SOC, the second OS comprising a kernel space and a user space;
- processing on the first core the input frames transmitted to the one or more tasks run by the sequencer of the RTOS and on the second core the input frames transmitted to the network device driver of the second OS;
- transmitting output frames related to RTOS tasks from the one or more tasks run by the sequencer of the RTOS to the frame processor;
- transmitting output frames related to non RTOS tasks from the network device driver of the second OS to the frame processor;
- classifying and scheduling the output frames at the frame processor;
- transmitting the scheduled output frames from the frame processor to the NIC and from the NIC to the MAC.

2. The method according to claim 1, whereby the RTOS is implemented on additional first cores of the SOC.

3. The method according to any of the above claims, whereby the method further comprises:
- parsing and classifying the input frames at the frame processor according to the classification comprising one or more other classes related to other RTOS tasks;
- transmitting input frames classified in the one or more other classes from the frame processor to one or more tasks run by one or more dedicated other sequencers of one or more dedicated other RTOS, whereby the one or more dedicated other RTOS are implemented on one or more dedicated cores of the SOC.

4. The method according to any of the above claims, whereby the second OS is implemented on additional second cores of the SOC.

5. The method according to any of the above claims, whereby the method further comprises:
- parsing and classifying the input frames at the frame processor according to the classification comprising one or more further classes related to non RTOS tasks;
- transmitting input frames classified in the one or more further classes from the frame processor to one or more dedicated further network device drivers of one or more dedicated further OS implemented on one or more dedicated further cores of the SOC, the one or more dedicated further OS comprising a dedicated further kernel space and a dedicated further user space.

6. The method according to any of the above claims, whereby the method further comprises:
- receiving, at the network device driver of the second OS, input frames exclusively transmitted from the frame processor of the RTOS.

7. The method according to any of the above claims, whereby the method further comprises:
- transmitting, by the network device driver of the second OS, output frames exclusively to the frame processor of the RTOS.

8. The method according to any of the above claims, whereby the method further comprises:
- sharing, by the RTOS and by the kernel of the second OS, a buffer storing frame data.

9. The method according to any of claims 1 to 7, whereby the method further comprises:
- preventing access to an RTOS buffer from the second OS.

10. The method according to any of the above claims, whereby the classifying the input frames further comprises:
- attaching, by the frame processor, a stream class identifier to the input frames according to classification rules; and
- passing the input frame and attached stream class identifier to a queue identification module of the frame processor.

11. The method according to any of the above claims, whereby the frame processor is applying dynamically defined classification rules.

12. The method according to claim 11, whereby either one or both of the kernel of the second OS and applications of the RTOS are contributing to dynamically defining the classification rules.

13. The method according to any of the above claims, whereby the classifying and scheduling the output frames at the frame processor comprises:
- attaching, by the frame processor, a stream class identifier to the output frames according to classification rules; and
- applying scheduling rules to the output frames depending on both time and priority of the attached stream class of the output frames for frame transmission of the scheduled output frames.

14. A multicore system-on-chip, SOC, device comprising processing cores and a memory, the processing cores being configured to operate according to any of the above method claims.

15. A computer-readable storage medium comprising instructions which, when executed by processing cores of a multicore system-on-chip, SOC, device, cause the processing cores to carry out the method of any of the above claims.
